# EUROPÄISCHE PATENTSCHRIFT

(11) **EP 3 499 687 B1**
(45) Veröffentlichungstag und Bekanntmachung des Hinweises auf die Patenterteilung: **26.10.2022**
(21) Anmeldenummer: 18209707.1
(22) Anmeldetag: 03.12.2018
(51) Int. Cl.: H02K 1/276, H02K 1/24

(54) **ROTOR EINER ELEKTRISCHEN MASCHINE**
ROTOR OF AN ELECTRIC MACHINE
ROTOR D'UNE MACHINE ÉLECTRIQUE

(30) Priorität: 13.12.2017 DE 102017222683
(43) Veröffentlichungstag der Anmeldung: 19.06.2019
(73) Patentinhaber: Baumüller Nürnberg GmbH, 90482 Nürnberg (DE)
(72) Erfinder: KURFÜRST, Jiri, 593 01 Bystrice nad Pernstejnem (CZ); SKODA, Jirí, 602 00 Brno (CZ); JINDRA, Tomás, 592 11 Velká Losenice (CZ); REZEK, Jan, 675 51 Jaromerice nad Rokytnou (CZ); KNEBL, Ladislav, 742 75 Novy Jicín (CZ)
(74) Vertreter: FDST Patentanwälte

(56) Entgegenhaltungen:
- EP-A1- 2 995 820
- EP-A1- 3 208 917
- US-A- 6 047 460
- US-A- 6 133 662
- US-A1- 2003 090 167
- US-A1- 2016 315 526

## Beschreibung

Die Erfindung betrifft eine elektrische Maschine mit einem Rotor, der eine Anzahl an Permanentmagneten aufweist, von denen jeder in jeweils einer zugeordneten Tasche des Rotors angeordnet ist. Ferner betrifft die Erfindung einen Rotor einer elektrischen Maschine. Die elektrische Maschine ist jeweils bevorzugt ein Synchron-Reluktanzmotor. Alternativ oder in Kombination hierzu ist die elektrische Maschine ein Bestandteil eines Nutz-/Kraftfahrzeugs.

Kraftfahrzeuge werden mittels eines Motors angetrieben. Dieser ist beispielsweise als Verbrennungskraftmaschine ausgestaltet, bei dem mittels Verbrennung von Energieträgern eine Rotationsbewegung von Rädern des Kraftfahrzeugs erzeugt wird. Als Alternative hierzu werden Elektromotoren verwendet, die in Wirkverbindung mit den Rädern stehen. Der Elektromotor selbst ist mittels einer Batterie des Kraftfahrzeugs betrieben, welche in zeitlichen Abständen geladen werden muss. Dies erfolgt üblicherweise mittels eines stationären Versorgernetzwerks. Bei diesen Kraftfahrzeugen handelt es sich somit um sogenannte vollelektrische Kraftfahrzeuge. Bei diesen ist ferner auch bekannt, einer etwaigen Oberleitung elektrische Energie zu entnehmen, wobei das Kraftfahrzeug entlang der Oberleitung bewegt wird. Alternative Antriebskonzepte sehen vor, dass mittels der Verbrennungskraftmaschine die elektrische Energie zum Betrieb des Elektromotors bereitgestellt wird, wobei die Verbrennungskraftmaschine unabhängig von der tatsächlichen Geschwindigkeit des Kraftfahrzeugs in einem optimalen Betriebszustand betrieben wird. Mit anderen Worten handelt es sich um ein Hybrid-Kraftfahrzeug.

Um eine Komplexität und einen Wirkungsgrad zu verbessern ist mechanisch zwischen den Elektromotor und das angetriebene Rad kein Getriebe oder lediglich ein Getriebe mit einem vergleichsweise geringen Übersetzungsverhältnis geschaltet. Somit ist es erforderlich, dass mittels des Elektromotors ein vergleichsweise großes Drehmoment bei einer vergleichsweise geringen Drehzahl bereitgestellt wird.

Elektrische Maschinen weisen üblicherweise Permanentmagneten auf, welche an einem Rotorkörper befestigt sind. Hierbei ist es erforderlich, dass die Permanentmagneten in einer bestimmten Orientierung hinsichtlich des Rotorkörpers angeordnet werden, sodass sich magnetische Pole an bestimmten, vordefinierten Positionen des Rotors ausbilden. Die Permanentmagneten weisen üblicherweise einen im Wesentlichen rechteckigen Querschnitt auf. Somit ist zunächst nicht eindeutig identifizierbar, in welche Richtung die Magnetisierungsrichtung der Permanentmagneten weist. Folglich muss vor Montage an dem Rotorkörper stets die tatsächliche Magnetisierungsrichtung bestimmt werden, was einen Aufwand erhöht. Alternativ werden die Permanentmagnete bereits unterschiedlich gefertigt und entsprechend deren Magnetisierungsrichtung unterschiedlich gelagert, was die Montage vereinfacht. Hierbei ist jedoch eine zusätzliche Lagerhaltung erforderlich, so, dass die Herstellung, und insbesondere die Kosten zur Herstellung, erhöht sind.

Aus US 6,133,662 A ist ein Elektromotor mit Permanentmagneten bekannt. Die Permanentmagnete weisen einen trapezförmigen Querschnitt auf und sind in radialer Richtung magnetisiert. Hierbei wechseln sich die Polaritäten bei tangential benachbarten Permanentmagneten ab, sodass keine gleichartigen Permanentmagneten herangezogen werden können.

Aus US 2003/0090167 A1 ist ein Rotor einer elektrischen Maschine eines Kraftfahrzeugs bekannt. Aus EP 2 995 820 A1 ist eine Vakuumpumpe bekannt. Diese weist einen Rotor mit einem Paket von Stahlblechen auf. Die Stahlbleche werden von wenigstens einer Schweißnaht aneinander gehalten.

Aus US 6,047,460 A ist ein Permanentmagnetrotor bekannt, der in einer Ausführungsform vier Permanentmagneten aufweist. Die Permanentmagneten sind in Radialrichtung magnetisiert und in jeweiligen Taschen positioniert. Mittels Anordnung der Permanentmagneten in den Taschen werden diese zueinander orientiert.

Der Erfindung liegt die Aufgabe zugrunde, einen besonders geeigneten Rotor einer elektrischen Maschine sowie eine besonders geeignete elektrische Maschine anzugeben, wobei vorteilhafterweise eine Herstellung vereinfacht ist.

Hinsichtlich des Rotors wird diese Aufgabe durch die Merkmale des Anspruchs 1 und hinsichtlich der elektrischen Maschine durch die Merkmale des Anspruchs 8 erfindungsgemäß gelöst. Vorteilhafte Weiterbildungen und Ausgestaltungen sind Gegenstand der jeweiligen Unteransprüche.

Der Rotor ist ein Bestandteil einer elektrischen Maschine, die beispielsweise ein Synchron-Reluktanzmotor ist. Der Rotor ist somit geeignet, insbesondere vorgesehen und eingerichtet, innerhalb eines Synchron-Reluktanzmotor eingesetzt zu werden. Hierbei wird der Rotor bei Betrieb zweckmäßigerweise um eine Rotationsachse rotiert.

Der Rotor weist eine Anzahl an gleichartigen Permanentmagneten auf. Mit anderen Worten unterscheiden sich die Permanentmagneten nicht, wobei sich Unterschiede gegebenenfalls insbesondere lediglich aufgrund von Fertigungstoleranzen ergeben. So ist insbesondere die Form der Permanentmagneten gleich und auch deren Vorzugsrichtungen sind vorzugsweise gleich. Geeigneterweise ist zumindest eine Vorzugsrichtung der Permanentmagnete mittels der jeweiligen Magnetisierungsrichtung vorgegeben, und die Magnetisierungsrichtung bezüglich weiterer Merkmale der jeweiligen Permanentmagneten ist gleich. Mit anderen Worten sind die Permanentmagnete insbesondere nicht unterscheidbar. Der Rotor weist eine Anzahl an Taschen auf, die zweckmäßigerweise der Anzahl der Permanentmagneten entspricht. Hierbei ist jeweils einer der Permanentmagneten in jeweils einer der Taschen angeordnet. Mit anderen Worten ist jedem Permanentmagneten jeweils eine der Taschen des Rotors zugeordnet, und jeder Permanentmagnet ist in der jeweiligen Tasche angeordnet. Vorzugsweise wird jeder Permanentmagnet mittels der jeweiligen Tasche stabilisiert. Zum Beispiel sind die Permanentmagneten zueinander beabstandet. Mit anderen Worten liegen die Permanentmagneten mechanisch nicht direkt aneinander an und sind insbesondere mittels der Taschen zueinander beabstandet. Die Taschen selbst sind geeigneterweise ebenfalls zueinander beabstandet. Die Permanentmagneten sind vorzugsweise in einer tangentialen Richtung, also insbesondere in einer Umfangsrichtung, zueinander beabstandet. Geeigneterweise ist der Abstand der Permanentmagneten zu der Rotationsachse gleich und/oder konstant.

Die Permanentmagnete sind zweckmäßigerweise lediglich in einer, insbesondere einzigen, Position in der jeweiligen Tasche montierbar. Mit anderen Worten ist ein Anordnen der Permanentmagnete in der jeweiligen Tasche lediglich auf eine einzige Weise möglich. Somit wird mittels der Taschen sowohl die Orientierung der Permanentmagneten als auch deren Position vorgegeben. Dabei ist jedem Permanentmagneten jeweils eine radiale Gerade zugeordnet, anhand derer insbesondere eine Magnetisierungsrichtung des Permanentmagneten bestimmt ist. Hierbei sind die Magnetisierungsrichtungen jeweils benachbarter Permanentmagneten bezüglich der jeweiligen zugeordneten radialen Geraden um 180° gedreht. Mit anderen Worten unterscheidet sich die Magnetisierungsrichtung der benachbarten Permanentmagnete bezüglich der jeweiligen radialen Geraden, und zwar um im Wesentlichen genau 180°, wobei beispielsweise eine Abweichung von 5°, 2° oder 0° vorhanden ist. Somit wird mittels der Taschen die Magnetisierungsrichtung der Permanentmagnete bezüglich der jeweiligen radialen Geraden vorgegeben.

Aufgrund der Gleichartigkeit sämtlicher Permanentmagnete ist eine Fertigung der Permanentmagnete vergleichsweise kostengünstig, und es können Gleichteile herangezogen werden. Hierbei wird mittels der Taschen und der eindeutigen Positionierung der Permanentmagneten innerhalb dieser die Magnetisierungsrichtung der Permanentmagnete bezüglich der weiteren Bestandteilen des Rotors, geeigneterweise auch der radialen Geraden, vorgegeben, sodass eine aufwändige Bestimmung der Magnetisierungsrichtung oder eine unterschiedliche Lagerhaltung der Permanentmagneten nicht erforderlich ist. Vielmehr ist lediglich eine einzige Montageposition ermöglicht. Somit ist eine fehlerhafte Montage der Permanentmagneten und somit eine fälschliche Ausprägung von Magnetpolen des Rotors ausgeschlossen, sodass einerseits eine Qualität erhöht und ein Ausschuss für verringert ist. Zudem ist die Herstellung vergleichsweise einfach, weswegen Herstellungskosten reduziert sind. Zum Beispiel sind die Taschen und/oder die Permanentmagneten derart ausgebildet, dass diese lediglich in der bestimmten Position in der jeweiligen Tasche montierbar sind. Insbesondere sind die Permanentmagnete lediglich in einer einzigen Position in der jeweiligen Tasche anordnenbar. Somit ist lediglich ein Einführen der Permanentmagnete in die Taschen in der bestimmten Position ermöglicht. Aufgrund der Änderung der Magnetisierungsrichtung zwischen benachbarten Permanentmagneten ist eine Ausbildung von Magnetpolen des Rotors vereinfacht.

Insbesondere weist jeder der Permanentmagnete und/oder jede Tasche ein bestimmtes Merkmal auf, sodass lediglich die Montage in der bestimmten Position möglich ist. Beispielsweise unterscheiden sich in der tangentialen Richtung benachbarte Taschen, und insbesondere sind die in der Tangentialrichtung jeweils übernächsten Taschen gleichartig und insbesondere hinsichtlich der jeweiligen zugeordneten radialen Geraden symmetrisch und oder gleichartig. Beispielsweise weist der Rotor acht derartige Permanentmagnete und somit vorzugsweise ebenfalls acht derartige Taschen auf.

Die Permanentmagnete sind beispielsweise aus NdFeB gefertigt oder umfassen dieses. Besonders bevorzugt jedoch sind Permanentmagnete aus einem Ferrit erstellt, was Herstellungskosten reduziert. Beispielsweise weist der Rotor eine Anzahl an Kühlöffnungen auf, die beispielsweise in einer axialen Richtung durch den Rotor hindurch ragen. Die Kühlöffnungen sind beispielsweise zylinderförmigen ausgestaltet, wobei der Querschnitt zum Beispiel rund oder vieleckig, beispielsweise dreieckig, ausgestaltet ist. Bei Betrieb wird vorzugsweise ein Fluid durch die Kühlöffnungen geleitet. Hierfür sind die Kühlöffnungen geeignet, insbesondere vorgesehen und eingerichtet. Das Kühlfluid ist beispielsweise eine Flüssigkeit oder besonders bevorzugt ein Gas, wie Luft, was Herstellungskosten reduziert.

Der Rotor umfasst ein Blechpaket, welches eine Anzahl an in der axialen Richtung übereinander gestapelt Blechen aufweist. Die Bleche sind zweckmäßigerweise aus einem Eisen erstellt, insbesondere einem Weicheisen, und elektrisch zueinander isoliert. Insbesondere sind die Bleche aus einem Trafoblech erstellt. Die Bleche sind zweckmäßigerweise gleichartig ausgestaltet und vorzugsweise fluchtend übereinander angeordnet. Insbesondere sind die Bleche mittels Stanzen erstellt. Vorzugsweise ist jede Blechlage einstückig ausgestaltet. Mit anderen Worten ist jede Lage des Blechpakets in der axialen Richtung mittels lediglich eines einzigen Blechs gebildet. Das Blechpaket weist die Taschen auf, die insbesondere in der axialen Richtung durch das Blechpaket hindurch verlaufen. Insbesondere sind die Taschen in der tangentialen Richtung (Tangentialrichtung) und der radialen Richtung (Radialrichtung) geschlossen. Mit anderen Worten sind die Taschen lediglich in der Axialrichtung geöffnet, sodass ein Einführen der Permanentmagneten in den jeweiligen Taschen lediglich in der axialen Richtung möglich ist. Nach einer Montage ist Permanentmagnet sowohl in der radialen als auch tangentialen Richtung von dem Blechpaket umgeben. Hierbei ist insbesondere zwischen den Permanentmagneten und dem Blechpaket eine elektrische Isolierung angeordnet, beispielsweise sind die Permanentmagneten mit einem Lack versehen.

Eine der Stirnseiten des Blechpakets ist teilweise mit einer ersten Druckscheibe abgedeckt, die vorzugsweise mechanisch direkt an der Stirnseite des Blechs, insbesondere an einem der Bleche des Blechpakets, anliegt. Die erste Druckscheibe ist bezüglich der Taschen in der radialen Richtung nach innen versetzt. Mit anderen Worten werden die Taschen mittels der ersten Druckscheibe nicht überdeckt, und sind somit frei zugänglich. Die erste Druckscheibe liegt kraftschlüssig an dem Blechpaket an und ist zweckmäßigerweise an diesem montiert. Somit wird das Blechpaket mittels der ersten Druckscheibe stabilisiert. Der Rotor weist eine weitere erste Druckscheibe auf, mit der die weitere Stirnseite des Blechpakets, also das Ende des Blechpakets in der Axialrichtung, abgedeckt ist, und die bezüglich der Taschen in der Radialrichtung ebenfalls nach innen versetzt ist.

Zweckmäßigerweise ist das Blechpaket kraftschlüssig zwischen den beiden ersten Druckscheiben gehalten. Die ersten Druckscheiben sind gleichartig, sodass Gleichteile herangezogen werden können, was Herstellungskosten reduziert. Es ragen hierbei Schrauben oder Gewindestangen oder andere Befestigungsmittel durch das Blechpaket hindurch, mittels derer die beiden ersten Druckscheiben aneinander befestigt sind, sodass das Blechpaket zwischen die beiden ersten Druckscheiben geklemmt ist. Somit wird das Blechpaket mit den beiden ersten Druckscheiben oder zumindest mit der einen der ersten Druckscheiben stabilisiert, sodass ein Ablösen der einzelnen Bleche voneinander unterbunden ist. Somit ist ein aneinander Befestigen der einzelnen Bleche des Blechpakets nicht erforderlich, was eine Herstellung vereinfacht. Besonders bevorzugt jedoch sind die Bleche miteinander bereits verbunden, beispielsweise verbacken oder stanzpaketiert. Hierbei wird mittels der ersten Druckscheibe, insbesondere den beiden ersten Druckscheiben, eine Stabilität des Blechpakets erhöht, sodass bei einer Montage des Blechpakets an weiteren Bestandteilen des Rotors oder der etwaigen Welle, ein Auflösen des Blechpakets verhindert ist. Die erste Druckscheibe ist beispielsweise aus einem Metall oder besonders bevorzugt aus einem Kunststoff erstellt. Somit ist ein elektrischer Kurzschluss verhindert, und Herstellungskosten sind reduziert. Insbesondere ist die erste Druckscheibe ein Kunststoffspritzgussteil. Sofern der Rotor, insbesondere das Blechpaket, die Kühlöffnungen aufweist, weist die erste Druckscheibe, insbesondere beide erste Druckscheiben, sofern diese vorhanden sind, ebenfalls hiermit fluchtende Öffnungen auf, sodass das Kühlfluid bei Betrieb ungehindert durch die ersten Druckscheiben hindurch treten kann. Geeigneterweise ist die erste Druckscheibe konzentrisch zur Rotationsachse angeordnet und/oder drehsymmetrisch bezüglich dieser. Ferner ist es ermöglicht, bei Problemen bei der Herstellung der elektrischen Maschine, insbesondere bei einer Beschädigung eines der Permanentmagneten bei oder nach dessen Montage, zu ersetzen. Dabei ist ein Aufwand vergleichsweises gering, und der beschädigte Permanentmagnet wird insbesondere mittels Druckausübung in axialer Richtung aus der Tasche entfernt und durch einen neuen Permanentmagneten ersetzt.

Die Ausgestaltung des Rotors mit dem Blechpaket und der ersten Druckscheibe, die bezüglich der Taschen in der Radialrichtung nach innen versetzt ist, ist unabhängig von der Montage der Permanentmagnete lediglich in der einzigen Position und wird vielmehr als unabhängige Erfindung betrachtet. Mit anderen Worten wird als unabhängige Erfindung die elektrische Maschine mit dem die Taschen aufweisenden Blechpaket erachtet, das die Anzahl der in der axialen Richtung übereinandergestapelter Bleche aufweist, wobei eine der Stirnseiten des Blechpakets teilweise mit der ersten Druckscheibe abgedeckt ist, die bezüglich der Taschen in der Radialrichtung nach innen versetzt ist, und die kraftschlüssige an dem Blechpaket anliegt, wobei insbesondere das Blechpaket zwischen den zwei derartigen ersten Druckscheiben kraftschlüssige gehalten ist.

Eine der Stirnseiten des Blechpakets ist zumindest teilweise, beispielsweise vollständig, mit einer zweiten Druckscheibe abgedeckt. Mittels der zweiten Druckscheibe sind die Taschen zumindest teilweise überdeckt, beispielsweise vollständig. Mit anderen Worten ragt die zweite Druckscheibe in der radialen Richtung zumindest teilweise über die Öffnungen der Taschen hinüber. Somit sind im Montagezustand ebenfalls die Permanentmagnete mittels der zweiten Druckscheibe abgedeckt, die beispielsweise mechanisch direkt an den Permanentmagneten anliegt. Somit wird mittels der zweiten Druckscheibe ein Ablösen der Permanentmagneten in der axialen Richtung aus den Taschen hinaus unterbunden. Geeigneterweise befindet sich die zweite Druckscheibe auf der gleichen Seite des Blechpakets, wie die erste Druckscheibe. Hierbei ist insbesondere die erste Druckseite in der axialen Richtung zwischen dem Blechpaket und der zweiten Druckscheibe angeordnet. Die zweite Druckscheibe ist an der ersten Druckscheibe befestigt. Vorzugsweise weist die zweite Druckscheibe eine Aussparung für die erste Druckscheibe auf, sodass die zweite Druckscheibe ebenfalls mechanisch direkt an dem Blechpaket oder zumindest den Permanentmagneten anliegt. Somit umgreift die zweite Druckscheibe die erste Druckscheibe zumindest teilweise, und die zweite Druckscheibe wird somit ebenfalls mittels des Blechpakets und der ersten Druckscheibe stabilisiert. Vorzugsweise ist die zweite Druckscheibe konzentrisch zur Rotationsachse angeordnet und/oder drehsymmetrisch bezüglich dieser. Vorzugsweise sind beide Stirnseiten des Blechpakets mit jeweils einer zugeordneten zweiten Druckscheibe abgedeckt. Mit anderen Worten weist der Rotor eine weitere zweite Druckscheibe auf. Vorzugsweise sind die beiden zweiten Druckscheiben baugleich, was Herstellungskosten reduziert. Alternativ unterscheiden sich die beiden zweiten Druckscheiben. Die zweite Druckscheibe ist beispielsweise aus einem Metall oder besonders bevorzugt aus einem Kunststoff gefertigt. Mittels der zweiten Druckscheiben werden lediglich vergleichsweise geringe Kräfte kompensiert, die bei Betrieb auf die Permanentmagnete in der axialen Richtung wirken. Vorzugsweise ist die zweite Druckscheibe filigraner oder weniger robust als die erste Druckscheibe ausgestaltet, was ein Gewicht des Rotors verringert und somit dessen Trägheit. Sofern die beiden zweiten Druckscheiben vorhanden sind, sind diese beispielsweise jeweils an dem Blechpaket und/oder der ersten Druckscheibe bzw. den beiden ersten Druckscheiben befestigt. Alternativ hierzu sind die beiden zweiten Druckscheiben aneinander befestigt, beispielsweise mittels eines Befestigungsmittels, welches durch das Blechpaket hindurch reicht, beispielsweise eine Schraube oder Gewindestange. Insbesondere wird mittels der ersten Druckscheibe ein Ablösen der Bleche voneinander unterbunden, wenn die Permanentmagneten in das Blechpaket, insbesondere die Taschen, in der axialen Richtung eingeführt werden.

Die Erfindung betrifft ferner ein Verfahren zur Herstellung der elektrischen Maschine, insbesondere des Rotors der elektrischen Maschine. Hierbei wird zunächst das Blechpaket bereitgestellt, bei Bleche in der axialen Richtung übereinander gestapelt sind. Die einzelnen Bleche sind dabei beispielsweise bereits aneinander befestigt oder lediglich lose aufeinander gelegt. In einem weiteren Arbeitsschritt wird die erste Druckscheibe kraftschlüssig an das Blechpaket angelegt, nämlich auf dessen Stirnseite. Insbesondere werden zwei derartige erste Druckscheiben verwendet, und das Blechpaket kraftschlüssig zwischen diesen gehalten. In einem weiteren Arbeitsschritt werden die Permanentmagnete in die Taschen des Blechpakets in der axialen Richtung eingeführt. Hierbei wird ein Ablösen der Bleche voneinander mittels der ersten Druckscheiben verhindert, mittels derer das Blechpaket somit stabilisiert ist. In einem weiteren Arbeitsschritt wird die zweite Druckscheibe montiert, sodass ein Ablösen der Permanentmagnete aus dem Blechpaket verhindert ist. Insbesondere sind beide Stirnseiten des Blechpakets mit jeweils einer zugeordneten zweiten Druckscheibe abgedeckt.

Alternativ hierzu wird bereits vor Montage der Permanentmagneten eine der Stirnseiten des Blechpakets mit der zweiten Druckscheibe abgedeckt, sodass ein zu weites Einführen der Permanentmagnete unterbunden ist. In einer weiteren Alternative weist das Blechpaket lediglich eine einzige erste Druckscheibe und eine einzige zweite Druckscheibe auf, die jeweils unterschiedlichen Stirnseiten des Blechpakets zugeordnet sind. Hierbei sind die erste Druckscheibe und die zweite Druckscheibe vorzugsweise aneinander befestigt, beispielsweise mittels der Gewindestangen, und das Blechpaket ist kraftschlüssig zwischen der ersten und der zweiten Druckscheibe gehalten. Im Anschluss hieran werden die Permanentmagnete von der Stirnseite, der die erste Druckscheibe zugeordnet ist, in die Taschen eingeführt, wobei ein zu weites Einführen mittels der zweiten Druckscheibe verhindert ist. Sobald dies erfolgt ist, wird optional, insbesondere bevorzugt, die Stirnseite, der die erste Druckscheibe zugeordnet ist, mit der weiteren zweiten Druckscheibe abgedeckt. Das Verfahren ist insbesondere unabhängig von der Anordnung der Permanentmagnete lediglich in einer einzigen Position der jeweiligen Tasche, wobei die Magnetisierungsrichtung bezüglich der dem jeweiligen Permanentmagneten zugeordneten radialen Geraden um 180° gedreht ist, und wird insbesondere als eigenständige Erfindung betrachtet.

Die radialen Geraden, die jedem Permanentmagneten zugeordnet ist, ist insbesondere anhand der Rotationsachse definiert, die somit jede radiale Gerade schneidet. Geeigneterweise schneidet hierbei jede radiale Gerade den Schwerpunkt des jeweils zugeordneten Permanentmagneten, insbesondere den Schwerpunkt des Querschnitts senkrecht zur Rotationsachse des jeweils zugeordneten Permanentmagneten. Alternativ wird als Schwerpunkte der Mittelpunkt des Querschnitts herangezogen, welcher vorzugsweise gleich dem Schwerpunkt ist. Zumindest jedoch schneidet jede radiale Gerade den jeweils zugeordneten Permanentmagneten bzw. dessen Querschnitt senkrecht zur Rotationsachse. Somit ist die Position jedes Permanentmagneten mittels der radialen Geraden ebenfalls definiert. Insbesondere sind sämtliche radiale Geraden drehsymmetrisch bezüglich der Rotationsachse angeordnet, wobei der Symmetriewinkel gleich dem Bruch aus 360° und der Anzahl der radialen Geraden ist. Alternativ oder in Kombination hierzu ist der Symmetriewinkel (Drehwinkel zur Herstellung der Drehsymmetrie) gleich dem Bruch aus 360° und der Anzahl der Permanentmagnete. Somit sind die Magnetisierungsrichtungen zur Ausbildung von Magnetpolen geeignet angeordnet. Auch ist somit insbesondere eine Unwucht des Rotors vermieden.

Beispielsweise ist die Magnetisierungsrichtung jedes Permanentmagneten parallel zur jeweiligen tangentialen Richtung. Somit ist zwischen in tangentialer Richtung benachbarten Permanentmagneten jeweils ein Magnetpol ausgebildet. Besonders bevorzugt jedoch sind die Magnetisierungsrichtungen im Wesentlichen parallel zur jeweiligen radialen Geraden. Geeigneterweise sind die Permanentmagneten in radialer Richtung magnetisiert, wobei sich die Magnetisierungsrichtungen bei benachbarten Permanentmagneten zwischen radial nach innen und radial nach außen abwechseln. Insbesondere sind die Magnetisierungsrichtungen parallel zur jeweiligen radialen Richtung, wobei diese entweder radial nach innen oder radial nach außen gerichtet sind. Somit werden im Wesentlichen bezüglich jedes Permanentmagneten radial nach außen versetzt die Magnetpole des Rotors ausgebildet, was insbesondere bei der Ausgestaltung der elektrischen Maschine als Synchron-Reluktanzmotor geeignet ist.

Beispielsweise weist der Querschnitt der Permanentmagnete senkrecht zur axialen Richtung eine Asymmetrie auf. Alternativ oder in Kombination hierzu weist der Querschnitt einen Einschnitt auf, beispielsweise eine Kerbe. Besonders bevorzugt jedoch ist der Querschnitt jedes Permanentmagneten senkrecht zur Axialrichtung trapezförmig, wobei insbesondere ein gleichmäßiges Trapez den Querschnitt bildet. Somit ist bei geeigneter Ausgestaltungsform der Taschen jeder der Permanentmagneten in der jeweiligen Tasche lediglich in der einen einzigen Position montierbar. Vorzugsweise ist der Querschnitt spiegelsymmetrisch bezüglich der jeweils zugeordneten radialen Geraden. Somit ist eine Ausbildung einer Unwucht vermieden oder zumindest reduziert. Aufgrund der Trapezform ist zudem eine Fertigung der Permanentmagneten vereinfacht. Auch ist eine Lagerhaltung aufgrund der regelmäßigen Form vereinfacht und ein Platzbedarf verringert. In weiteren Alternativen ist der Querschnitt jedes Permanentmagneten halbmondförmig, kreissegment-, kreissektor- oder U-förmig.

Beispielsweise ist der Querschnitt der Taschen senkrecht zur axialen Richtung gleich dem Querschnitt der Permanentmagnete senkrecht zur Axialrichtung. Hierbei ist insbesondere zwischen jeder der Taschen und dem zugeordneten Permanentmagneten eine Spielpassung erstellt. Somit ist einerseits eine Montage der Permanentmagneten vereinfacht. Andererseits ist jeder der Permanentmagnete vergleichsweise sicher gehalten. Zudem ist somit auch eine vergleichsweise einfache Identifizierung der Position möglich, in der jeder Permanentmagnet in der jeweiligen Tasche montierbar ist.

Vorzugsweise ist jeder der Tasche eine Kammer zugeordnet, die sich an die jeweilige Tasche in der tangentialen Richtung anschließt und zu dieser beabstandet ist. Beispielsweise ist zwischen jeder Tasche und der jeweiligen Kammer in tangentialer Richtung ein Steg gebildet. Die Ausdehnung der Kammer im Bereich der Tasche in der Radialrichtung entspricht zweckmäßigerweise gleich der Ausdehnung der Tasche in der radialen Richtung. Die Kammer selbst verläuft zumindest teilweise bevorzugt in der radialen Richtung und reicht vorzugsweise bis zum radialen äußeren Ende des Rotors, wobei die Kammer zweckmäßigerweise geschlossen ist. Die Kammer ist insbesondere mit einem para-oder diamagnetischen Materials befüllt, insbesondere Luft. Somit ist mittels der Kammer ein Flusssperrenschnitt bereitgestellt, sodass eine Ausbildung von Magnetfeldlinien verbessert. Zweckmäßigerweise sind jeder der Taschen je zwei derartige Kammern zugeordnet, die in der tangentialen Richtung auf jeweils gegenüberliegenden Seiten der jeweiligen Tasche angeordnet sind. Somit entspricht die Anzahl der Kammern dem Doppelten der Anzahl der Taschen. Infolgedessen sind die magnetischen Eigenschaften des Rotors verbessert.

In einer alternativen Ausgestaltungsform der Erfindung ist jede Tasche im Wesentlichen halbmondförmig in radialer Richtung nach außen weisend ausgestaltet. Hierbei weist jede Tasche zweckmäßigerweise einen im Wesentlichen in der Tangentialrichtung verlaufenden Mittelabschnitt auf, innerhalb dessen zweckmäßigerweise der jeweilige Permanentmagnet montiert ist. Geeigneterweise weist jede Tasche zumindest ein Halteelement, beispielsweise Kerben oder Vorsprünge, auf, mittels derer die Montage des jeweiligen Permanentmagneten erfolgt, insbesondere ein Halten des jeweiligen Permanentmagneten. Hierbei wird mittels des Halteelements zudem die Position vorgegeben, in der der jeweilige Permanentmagnet montierbar ist. Die Spitzen der Halbmondform der Taschen reichen zweckmäßigerweise bis nahe zu dem Umfang des Rotors und sind somit insbesondere in Radialrichtung nach außen weisend ausgestaltet. Somit ist mittels der Taschen selbst der Flusssperrenschnitt gebildet, was die magnetischen Eigenschaften des Rotors verbessert.

Vorzugsweise weist der Rotor eine weitere Anzahl an zweiten Permanentmagneten auf, wobei die zweiten Permanentmagneten untereinander insbesondere gleich sind. Die zweiten Permanentmagnete unterscheiden sich beispielsweise zu den Permanentmagneten oder sind ebenfalls gleichartig mit diesen. Zweckmäßigerweise ist jedem der zweiten Permanentmagnete eine zweite Tasche zugeordnet, und in der tangentialen Richtung benachbarte zweite Permanentmagnete sind lediglich in einer Position in der jeweiligen zweiten Tasche montierbar, wobei die Magnetisierungsrichtung der jeweils benachbarten zweiten Permanentmagneten bezüglich einer jedem der zweiten Permanentmagneten zugeordneten zweiten radialen Geraden um 180° gedreht ist. Beispielsweise ist jeweils eine der zweiten radialen Geraden gleich einer der radialen Geraden. Vorzugsweise ist hierbei jeder der zweiten Permanentmagnete einem der Permanentmagnete zugeordnet und bezüglich diesem in radialer Richtung lediglich nach außen versetzt. Dabei ist zweckmäßigerweise die Magnetisierungsrichtung jedes der zweiten Permanentmagneten gleich der Magnetisierungsrichtung des jeweils zugeordneten Permanentmagneten. Somit werden mittels der zweiten Permanentmagneten die mittels der Permanentmagneten bereitgestellten Magnetfelder verstärkt. Insbesondere ist jeder der zweiten Permanentmagneten zu dem jeweils zugeordneten Permanentmagneten und zu sämtlichen Permanentmagneten beabstandet. Zweckmäßigerweise weist der Rotor mehrere derartige weitere Anzahlen an Permanentmagneten auf, die bezüglich der verbleibenden Permanentmagnete beabstandet und jeweils in einer zugeordneten weiteren Tasche angeordnet sind. Hierbei unterscheiden sich die Magnetisierungsrichtungen jeweils benachbarter weiterer Permanentmagnete bezüglich einer dem jeweiligen weiteren Permanentmagneten zugeordneten radialen Geraden um 180°, und jeder der weiteren Permanentmagnete ist in der jeweils zugeordneten weiteren Tasche lediglich in einer einzigen Position montierbar. Vorzugsweise sind jeweils die sich unterscheidenden Permanentmagnete oder zumindest den unterschiedlichen Anzahlen zugeordnete Permanentmagnete entlang jeweils einer gemeinsamen radialen Geraden angeordnet und insbesondere zueinander beabstandet. Geeigneterweise ist die Magnetisierungsrichtung der jeweiligen Gruppe an Permanentmagneten gleich.

Die elektrische Maschine weist einen Rotor auf. Beispielsweise ist die elektrische Maschine bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 30 kW und 150 kW, zwischen 40 kW und 140 kW oder zwischen 60 kW und 100 kW und insbesondere gleich 80 kW auf, wobei jeweils zum Beispiel eine Abweichung von 10 kW, 5 kW, 2 kW oder 0 kW vorhanden ist. Alternativ weist die elektrische Maschine insbesondere eine Leistung zwischen 0,1 kW und 30 kW, zwischen 0,2 kW und 25 kW oder zwischen 0,3 kW und 19 kW und insbesondere gleich 10 kW auf, wobei jeweils zum Beispiel eine Abweichung von 2 kW, 1 kW, 0,5 kW oder 0 kW vorhanden ist. Geeigneterweise weist die elektrische Maschine eine Drehzahl, beispielsweise eine Nenndrehzahl oder maximale Drehzahl, zwischen 10 1/min. und 800 1/min., zwischen 30 1/min. und 600 1/min., zwischen 50 1/min. und 500 1/min. oder zwischen 100 1/min. und 400 1/min. auf, wobei insbesondere eine Abweichung von 100 1/min., 50 1/min., 20 1/min. oder 0 1/min. vorhanden ist. Alternativ weist die elektrische Maschine zweckmäßigerweise eine Drehzahl, beispielsweise eine Nenndrehzahl oder maximale Drehzahl, zwischen 10 1/min. und 5.000 1/min., zwischen 100 1/min. und 3.000 1/min., zwischen 1.000 1/min. und 3.000 1/min. oder zwischen 2.000 1/min. und 3.000 1/min. auf, wobei insbesondere eine Abweichung von 500 1/min., 200 1/min., 100 1/min. oder 0 1/min. vorhanden ist. Besonders bevorzugt weist die elektrische Maschine ein Drehmoment, beispielsweise ein Maximales- und/oder Nenndrehmoment zwischen 10 Nm und 2.000 Nm, zwischen 15 Nm und 175 Nm, zwischen 20 Nm und 150 Nm, zwischen 50 Nm und 100 Nm oder zwischen 50 Nm und 80 Nm auf, wobei insbesondere jeweils eine Abweichung von 50 Nm, 20 Nm, 10 Nm oder 0 Nm vorhanden ist.

Die elektrische Maschine ist beispielsweise ein permanent erregter Synchronmotor. Besonders bevorzugt ist die elektrische Maschine ein Synchron-Reluktanzmotor. Mit anderen Worten ist die elektrische Maschine eine Drehstrom-Synchronmaschine, wobei der Rotor vorzugsweise einen Flusssperrenschnitt oder ausgeprägte Pole aufweist. Hierbei wird bei Betrieb eine Rotationsbewegung des Rotors insbesondere zumindest zusätzlich aufgrund der Reluktanzkraft hervorgerufen, wobei beispielsweise zusätzlich die Lorentzkraft zur Bereitstellung der Rotationsbewegung beiträgt. Besonders bevorzugt wird jedoch lediglich anhand der Reluktanzkraft die Rotationsbewegung des Rotors hervorgerufen.

Beispielsweise ist die elektrische Maschine ein Bestandteil eines Nutz-/Kraftfahrzeugs und insbesondere eines Antriebs des Nutz-/Kraftfahrzeugs. Besonders bevorzugt ist die elektrische Maschine ein Bestandteil eines Hauptantriebs des Nutz-/Kraftfahrzeugs und dient somit dem Vortrieb des Nutz-/Kraftfahrzeugs. Hierfür ist im Montagezustand die elektrische Maschine beispielsweise mit einem Rad des Nutz-/Kraftfahrzeugs gekoppelt, beispielsweise direkt oder mittelbar über ein Getriebe. Mit anderen Worten bildet die elektrische Maschine eine Hauptmaschine des Nutz-/Kraftfahrzeugs oder zumindest eine der Hauptmaschine des Nutz-/Kraftfahrzeugs, sofern das Nutz-/Kraftfahrzeug mehrere Hauptmaschinen aufweist. In einer weiteren Alternative ist die elektrische Maschine ein Bestandteil eines Fahrrads, insbesondere eines sogenannten E-Bikes. In weiteren Ausgestaltungsformen der Erfindung ist die elektrische Maschine ein Bestandteil einer Industrieanlage und dient insbesondere dem Antrieb eines Aktors der Industrieanlage, wie eines Förderbands, eines Roboters oder eines Bauteils zur Bearbeitung oder Herstellung eines Bauteils, wie eine Presse oder eine Förderraupe. Beispielsweise ist die elektrische Maschine ein Bestandteil einer Abfüllanlage, einer Spritzgussmaschine oder Textilmaschine.

Der Rotor ist insbesondere drehbar um eine Rotationsachse gelagert, die parallel zu einer axialen Richtung (Axialrichtung) ist. Geeigneterweise ist der Rotor drehsymmetrisch bezüglich der Rotationsachse ausgestaltet. Insbesondere weist die elektrische Maschine eine Welle auf, die beispielsweise aus einem Stahl erstellt ist. Die Welle ist zweckmäßigerweise konzentrisch zur Rotationsachse angeordnet, und der Rotor ist geeigneterweise auf die Welle aufgesetzt. Hierfür weist der Rotor zweckmäßigerweise eine geeignete Aussparung auf, sodass der Rotor im Wesentlichen hohlzylindrisch ausgestaltet ist. Vorzugsweise ist der Rotor drehfest mit der Welle verbunden, beispielsweise mittels einer Feder-Nut-Verbindung.

Der Rotor weist eine Anzahl an Taschen und an gleichartigen Permanentmagneten auf, von denen jeder in jeweils einer der Tasche angeordnet ist, wobei in einer tangentialen Richtung benachbarte Permanentmagnete lediglich in einer einzigen Position in der jeweiligen Tasche montierbar sind, bei der die Magnetisierungsrichtungen bezüglich einer dem jeweiligen Permanentmagneten zugeordneten radialen Geraden um 180° gedreht ist.

Insbesondere weist die elektrische Maschine einen Stator auf, der vorzugsweise eine Anzahl an Elektromagneten aufweist. Die Elektromagneten sind zweckmäßigerweise zu einer Anzahl an Phasen zusammengeschaltet, insbesondere zu drei Phasen. Die Phasen selbst sind miteinander zweckmäßigerweise in einer Dreiecks- oder Sternschaltung miteinander kontaktiert. Die Phasen sind zweckmäßigerweise mittels eines Frequenzumrichters bestromt. Der Frequenzumrichter ist beispielsweise ein Bestandteil der elektrischen Maschine, oder die elektrische Maschine weist geeignete Anschlüsse für einen derartigen Frequenzumrichter auf, beispielsweise ein Anschlussterminal. In diesem Fall sind der Frequenzumrichter und die elektrische Maschine zweckmäßigerweise Bestandteile eines Antriebs. Vorzugsweise weist der Frequenzumrichter eine Brückenschaltung, beispielsweise eine B6-Schaltung auf. Die elektrische Maschine ist zum Beispiel ein Außenläufer. Besonders bevorzugt jedoch ist die elektrische Maschine ein Innenläufer. Mit anderen Worten umgibt der Stator den Rotor umfangsseitig, insbesondere also in einer radialen Richtung.

Die im Zusammenhang mit der elektrischen Maschine ausgeführten Weiterbildungen und Vorteile sind sinngemäß auch auf den Rotor/das Verfahren zur Herstellung zu übertragen und umgekehrt.

Nachfolgend werden Ausführungsbeispiele der Erfindung anhand einer Zeichnung näher erläutert. Darin zeigen:
- Fig. 1: schematisch ein Nutz-/Kraftfahrzeug mit einem Synchron-Reluktanzmotor,
- Fig. 2: schematisch in einer Schnittdarstellung senkrecht zu einer axialen Richtung den Synchron-Reluktanzmotor mit einem Rotor,
- Fig. 3: schematisch in einer Schnittdarstellung parallel zu der axialen Richtung den Rotor,
- Fig. 4: ein Verfahren zur Herstellung des Rotors,
- Fig. 5: perspektivisch ein Blechpakt des Rotors,
- Fig. 6: ausschnittsweise das Blechpaket mit Taschen, wobei jeder Tasche ein Permanentmagnet zugeordnet ist,
- Fig. 7: perspektivisch das Blechpaket mit einer daran anliegenden ersten Druckscheibe,
- Fig. 8: perspektivisch das Blechpaket mit der daran anliegenden ersten Druckscheibe und einer daran anliegenden zweiten Druckscheibe,
- Fig. 9: perspektivisch eine weitere Ausführungsform des Blechpakets des Rotors,
- Fig. 10: ausschnittsweise das Blechpaket gemäß Fig. 9,
- Fig. 11: perspektivisch das Blechpaket gemäß Fig. 9, mit der daran anliegenden ersten Druckscheibe, und
- Fig. 12: perspektivisch das Blechpaket gemäß Fig. 9, mit der daran anliegenden ersten Druckscheibe und der daran anliegenden zweiten Druckscheibe.

Einander entsprechende Teile sind in allen Figuren mit den gleichen Bezugszeichen versehen.

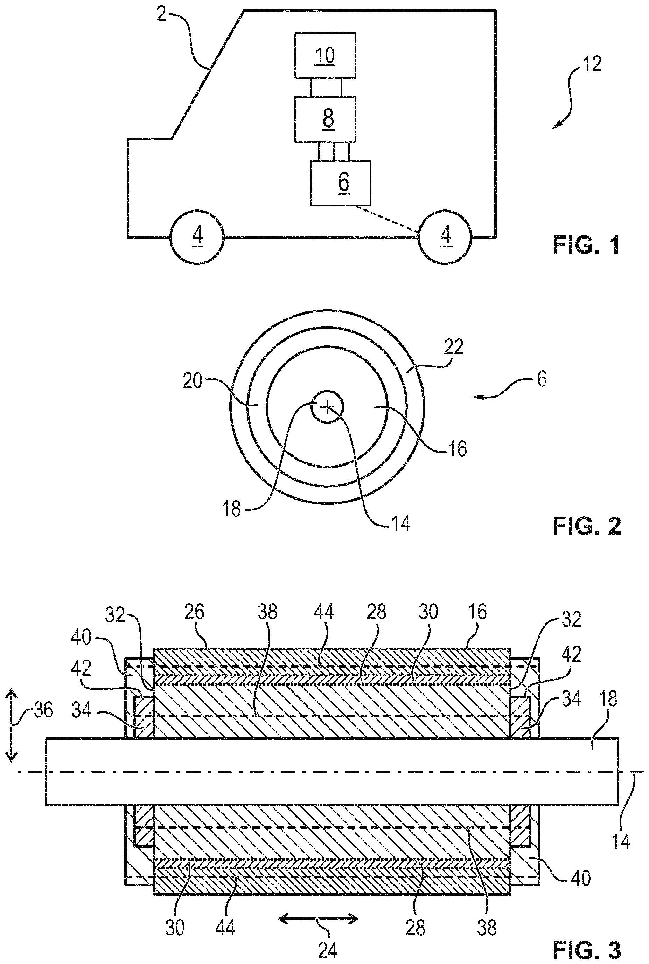

In Figur 1 ist ein Kraftfahrzeug 2 mit mehreren Rädern 4 schematisch vereinfacht gezeigt. Das Kraftfahrzeug 2 ist ein Nutzkraftfahrzeug, beispielsweise ein Lastkraftwagen (Lkw), Bus oder sonstiges Transportfahrzeug, und weist vier derartige Räder 4 auf. Ferner umfasst das Kraftfahrzeug 2 eine elektrische Maschine 6 in Form eines Synchron-Reluktanzmotors, mittels derer zumindest eines der Räder 4 angetrieben ist. Die elektrische Maschine 6 ist mittels eines Frequenzumrichters 8 bestromt, welcher mittels einer Hochvoltbatterie 10 gespeist ist. Mittels der Hochvoltbatterie 10 wird eine Gleichspannung zwischen 400 V und 800 V bereitgestellt, welche mittels des Frequenzumrichters 8 in einen Wechselstrom (Drehstrom) umgewandelt wird, welcher drei Phasen aufweist. Hierfür weist der Frequenzumrichter 8 eine nicht näher dargestellte Brückenschaltung auf, nämlich eine B6-Schaltung. Der Frequenzumrichter 8 und die elektrische Maschine 6 bilden zusammen im Wesentlichen einen Antrieb 12.

In Figur 2 ist die elektrische Maschine 6 in einem Querschnitt senkrecht zu einer Rotationsachse 14 der elektrische Maschine 6 schematisch vereinfacht dargestellt. Die elektrische Maschine 6 weist einen im Wesentlichen hohlzylindrisch ausgestalteten Rotor 16 auf, der auf eine Welle 18 aufgesetzt ist, die konzentrisch zur Rotationsachse 14 angeordnet ist. Der Rotor 16 ist drehfest an der Welle 18 befestigt, die mittels nicht näher dargestellter Lager, wie Kugellager, drehbar um die Rotationsachse 14 gelagert ist. Umfangsseitig wird der Rotor 16 unter Ausbildung eines Luftspalts 20 von einem Stator 22 umgeben, der eine Anzahl an nicht näher dargestellten Elektromagneten aufweist. Die Elektromagneten selbst umfassen jeweils eine elektrische Spule, wobei die elektrischen Spulen des Stators 22 zu insgesamt drei Phasen verschaltet sind. Die Phasen sind zu einer Sternschaltung miteinander verschaltet und folglich um 120° elektrisch zueinander versetzt. Die Bestromung der einzelnen Phasen erfolgt mittels des Frequenzumrichters 8.

In Figur 3 ist schematisch der Rotor 16 in einer Schnittdarstellung entlang der Rotationsachse 14 gezeigt. Die Welle 18 steht hierbei in einer axialen Richtung 24 beidseitig über den Rotor 16 über und reicht somit durch diesen in der Axialrichtung 24 hindurch. Der Rotor 16 weist ein Blechpaket 26 auf, welches eine Anzahl an nicht näher dargestellten einzelnen Blechen umfasst, die in der Axialrichtung 24 übereinander gestapelt sind. Das Blechpaket 26 umfasst mehrere Taschen 28, die in der axialen Richtung 24 durch dieses hindurchragen, und innerhalb derer jeweils ein Permanentmagnet 30 angeordnet ist. Die Permanentmagneten 30 sind aus einem Ferrit erstellt, und die Taschen 28 sind lediglich in der Axialrichtung 24 endseitig geöffnet.

Beide Stirnseiten 32 des Blechpakets 26, also dessen Enden in der axialen Richtung 24, sind jeweils mit einer ersten Druckscheibe 34 abgedeckt, die jeweils im Wesentlichen ringförmig und zueinander baugleich ausgestaltet sind. Die ersten Druckscheiben 34 sind auf die Welle 18 aufgesetzt und somit im direkten mechanischen Kontakt mit dieser. Ferner sind die ersten Druckscheiben 34 bezüglich der Taschen 28 in einer radialen Richtung 36 nach innen und somit auf die Rotationsachse 14 hin versetzt. Mit anderen Worten sind die Öffnungen der durch das Blechpaket 26 hindurch reichenden Taschen 28 mit den ersten Druckscheiben 34 nicht abgedeckt. Die ersten Druckscheiben 34 sind aneinander mittels einer Anzahl an ersten Gewindestangen 38 befestigt, die durch entsprechende Aussparungen des Blechpakets 26 hindurch reichen. Dabei werden die ersten Druckscheiben 34 mittels der ersten Gewindestangen 38 gegen das Blechpaket 26 gepresst. Folglich wird das Blechpaket 26 kraftschlüssige zwischen den beiden ersten Druckscheiben 34 gehalten, die somit kraftschlüssige jeweils an dem Blechpaket 26 anliegen. Somit wird das Blechpaket 26 und insbesondere die einzelnen Bleche des Blechpakets 26 mittels der beiden ersten Druckscheiben 34 stabilisiert.

Ferner ist jeder der Stirnseiten 32 eine zweite Druckscheibe 40 zugeordnet, mittels derer die jeweilige Stirnseite 32 zumindest teilweise abgedeckt ist. Die zweiten Druckscheiben 40 sind zueinander baugleich und aus einem Kunststoff erstellt. Ferner überdecken die zweiten Druckscheiben 40 die Taschen 28 vollständig und sind auf die Welle 18 aufgesetzt und somit im direkten mechanischen Kontakt mit dieser. Zudem weist jeder der zweiten Druckscheiben 40 eine topfförmige Aussparung 42 auf, innerhalb derer die der gleichen Stirnseite 32 zugeordnete erste Druckscheibe 34 angeordnet ist. Somit ist jede der ersten Druckscheiben 34 in der axialen Richtung 24 zwischen einer der zweiten Druckscheiben 40 und dem Blechpaket 26 angeordnet. Die beiden zweiten Druckscheiben 40 sind mittels zweiter Gewindestangen 44 aneinander befestigt, die ebenfalls durch das Blechpaket 26 hindurch ragen. In einer alternativen Ausführungsform sind die zweiten Druckscheiben 40 an der jeweils der gleichen Stirnseite 32 zugeordneten ersten Druckscheibe 34 befestigt. Mittels der zweiten Druckscheiben 40 wird ein Ablösen der Permanentmagnete 30 aus den Taschen 28 in der axialen Richtung 24 unterbunden.

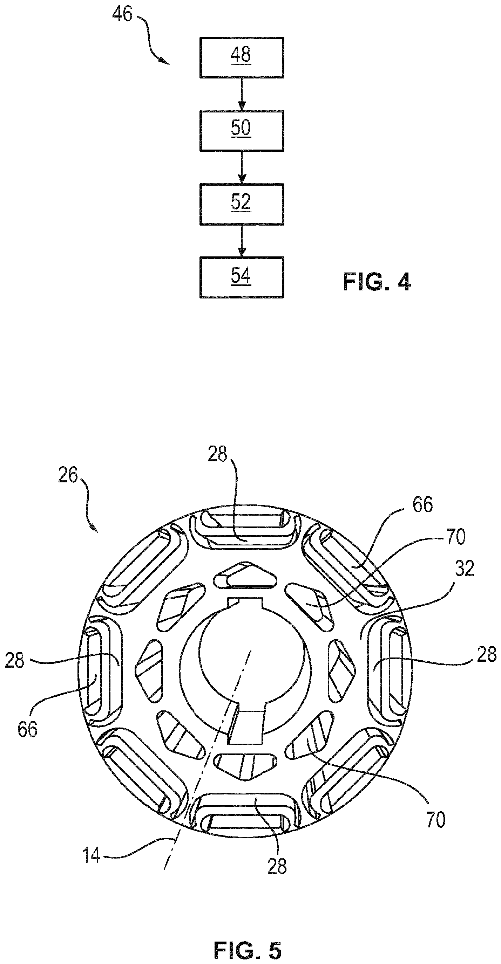

In Figur 4 ist ein Verfahren 46 zur Herstellung des Rotors 16 der elektrischen Maschine 6 gezeigt. In einem ersten Arbeitsschritt 48 wird das Blechpaket 26 mit den Taschen 28 bereitgestellt. Hierbei sind die Bleche des Blechpakets 26 entweder bereits aneinander befestigt oder liegen lediglich lose aneinander an. In einem sich anschließenden zweiten Arbeitsschritt 50 werden die ersten Druckscheiben 34 aneinander mittels der ersten Gewindestangen 38 befestigt und gegeneinander und somit auch gegen das Blechpaket 26 gepresst. Folglich werden die einzelnen Bleche des Blechpakets 26 zueinander stabilisiert. In einem sich anschließenden dritten Arbeitsschritt 52 wird jeder der Permanentmagnete 30 in einer der Taschen 28 angeordnet, wofür jeder Permanentmagnet 30 in der axialen Richtung 24 in jeweils die zugeordnete Tasche 28 eingeführt wird. Dabei wird mittels der aneinander befestigten ersten Druckscheiben 34 ein Ablösen der Bleche voneinander verhindert, sodass auch bei einer Spielpassung oder einem Presssitz zwischen dem Blechpaket 26 und den Permanentmagneten 30 ein Auflösen des Blechpakets 26 verhindert ist. In einem sich anschließenden vierten Arbeitsschritt 54 werden die zweiten Druckscheiben 40 montiert, und somit die Permanentmagnete 30 auch in der Axialrichtung 24 stabilisiert. Ferner wird das Blechpaket 26 auf die Welle 18 aufgeschoben, wobei auch hier mittels der ersten Druckscheiben 26 eine Beschädigung des Blechpakets 26 oder ein Versatz der einzelnen Bleche des Blechpakets 26 verhindert wird. Alternativ wird die Welle 18 zu einem beliebigen Zeitpunkt montiert, jedoch zumindest erst nach dem zweiten Arbeitsschritt 50.

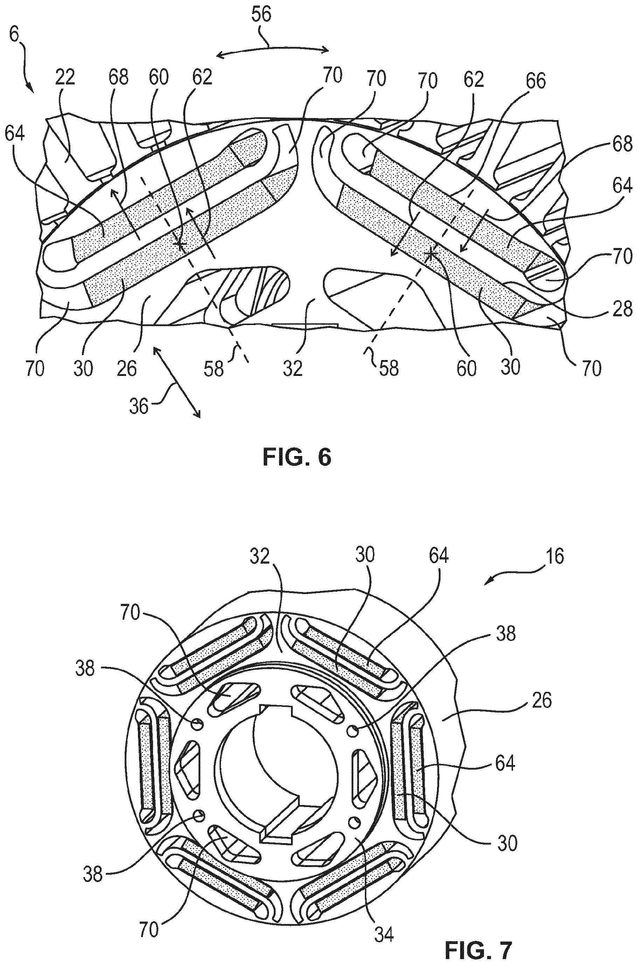

In Figur 5 ist das Blechpaket 26 in einer Draufsicht auf eine der Stirnseiten 32 gezeigt. Figur 6 zeigt einen Ausschnitt der elektrischen Maschine 6, wobei in den Taschen 28 die Permanentmagnete 30 montiert sind, die einen trapezförmigen Querschnitt senkrecht zur Rotationsachse 14 aufweisen, also senkrecht zur axialen Richtung 24. Das Trapez ist gleichmäßig, und sämtliche Permanentmagnete 30 sind zueinander baugleich. Der Querschnitt der Taschen 30 senkrecht zur Axialrichtung, 24, also senkrecht zur Rotationsachse 14 ist ebenfalls trapezförmig und gleich dem Querschnitt der Permanentmagnete 30, sodass zwischen diesen eine Spielpassung erstellt ist. Dabei sind sowohl die Taschen 28 als auch die Permanentmagnete 30 im Wesentlichen in der Tangentialrichtung 56 angeordnet.

Die Orientierung der in einer tangentialen Richtung 56 benachbarten Taschen 28 ist unterschiedlich, sodass ebenfalls die Orientierung der in der Tangentialrichtung 56 benachbarten Permanentmagneten 30 abwechselnd ist. Mit anderen Worten ist jedem der Permanentmagnete 30 eine radiale Gerade 58 zugeordnet, die den Schwerpunkt 60 jede des Querschnitts des jeweils zugeordneten Permanentmagneten 30 und die Rotationsachse 14 schneidet. Hierbei sind die Permanentmagneten 30 spiegelsymmetrisch bezüglich der jeweiligen radialen Geraden 58 angeordnet und weisen eine Magnetisierungsrichtung 62 auf, die parallel zur jeweiligen radialen Geraden 58 ist. Mit anderen Worten sind die Permanentmagnete 30 in der radialen Richtung 36 magnetisiert. Hierbei unterscheidet sich die Magnetisierungsrichtung 62 der in der tangentialen Richtung 56 benachbarten Permanentmagneten 30, sodass die Permanentmagneten 30 abwechselnd in der radialen Richtung 36 nach innen und nach außen magnetisiert sind. Zusammenfassend sind die in der Tangentialrichtung 56 benachbarte Permanentmagnete 30 lediglich in einer einzigen Position in der jeweiligen Tasche 28 montierbar, und die Magnetisierungsrichtung 62 der in der Tangentialrichtung 46 benachbarten Permanentmagnete 30 sind bezüglich der dem jeweiligen Permanentmagneten 30 zugeordneten radialen Geraden 58 um 180° gedreht.

Jeder der radialen Geraden 58 sind ferner zweite Permanentmagneten 64 zugeordnet, die zueinander baugleich sind. Somit weist der Rotor 16 genauso viele zweite Permanentmagnete 64 wie Permanentmagnete 30 auf. Die zugeordnete radiale Gerade 58 schneidet auch hier den Schwerpunkt der zweiten Permanentmagneten 64, die spiegelsymmetrisch bezüglich der jeweiligen radialen Geraden 58 in der Tangentialrichtung 56 angeordnet sind, und ebenfalls einen trapezförmigen Querschnitt aufweisen. Jeder der zweiten Permanentmagnete 64 ist in einer jeweils zugeordneten zweiten Tasche 66 unter Ausbildung einer Spielpassung montiert, sodass in der Tangentialrichtung 56 benachbarte zweite Permanentmagnete 64 lediglich in einer einzigen Position in der jeweiligen zugeordneten zweiten Tasche 66 montierbar sind. Die zweiten Permanentmagneten 64 weisen eine zweite Magnetisierungsrichtung 68 auf, die parallel zu der Magnetisierungsrichtung 62 des der gleichen radialen Geraden 58 zugeordneten Permanentmagneten 30 ist.

Jeder Tasche 28 und jeder zweiten Tasche 66 sind jeweils zwei Kammern 70 zugeordnet, die sich in der tangentialen Richtung 56 an die jeweilige Tasche 28, 66 anschließend und zur jeweiligen Tasche 28, 66 mittels eines Steges beabstandet sind. Somit ist ein Flusssperrenschnitt bereitgestellt, was eine Funktionsweise als Synchron-Reluktanzmotors verbessert. Ferner weist das Blechpaket 26 acht Kühlöffnungen 70 auf, die durch das Blechpaket 26 in der axialen Richtung. 24 hindurch ragen. Hierbei ist jeweils eine der Kühlöffnungen 70 bezüglich jeweils einer der Taschen 28 in der radialen Richtung 36 nach innen versetzt, und der Rotor 16 weist somit insgesamt acht Taschen 28 auf. Bei Betrieb tritt durch die Kühlöffnungen 70 Luft, und der Rotor 16 wird auf diese Weise gekühlt.

In Figur 7 ist der Rotor 16 perspektivisch mit Blick auf eine der Stirnseiten 32 des Blechpakets 26 gezeigt, innerhalb dessen die Permanentmagneten 30 sowie die zweiten Permanentmagnete 64 montiert sind. Auch ist die kraftschlüssig an der Stirnseite 32 anliegende erste Druckscheibe 34 dargestellt, die mittels der ersten Gewindestangen 38 befestigt ist. Die erste Druckscheibe 34 weist zu den Kühlöffnungen 70 korrespondierende Aussparungen auf, sodass bei Betrieb auch die Kühlluft durch die erste Druckscheibe 34 hindurch treten kann.

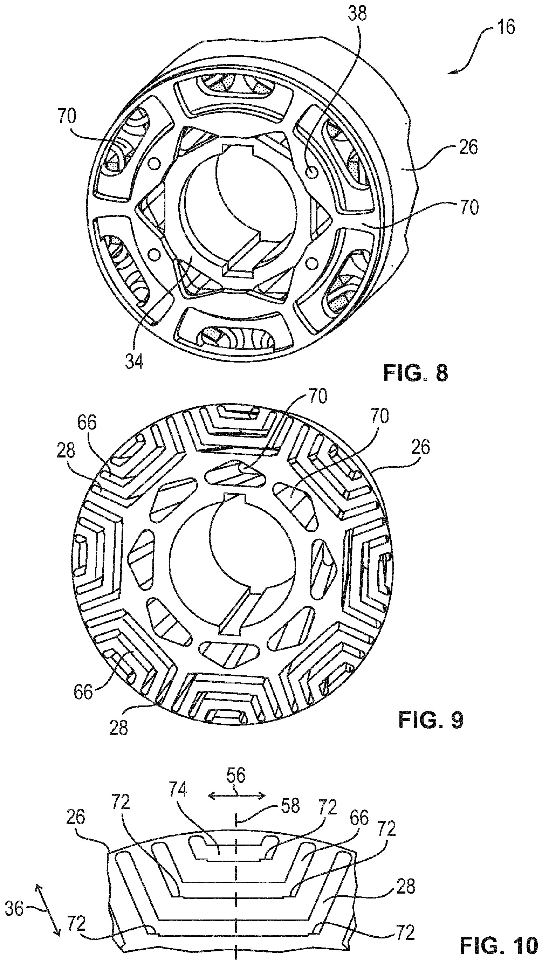

In Figur 8 ist der Rotor 16 mit montierter zweite Druckscheibe 70 gezeigt, mittels derer die vollständige Stirnseite 32 des Blechpakets 26 abgedeckt ist. Hierbei ist jedoch auf die zweiten Gewindestangen 44 verzichtet worden, und die zweite Druckscheibe 70 ist ebenfalls mittels der ersten Gewindestangen 38 an den weiteren Bestandteilen des Rotors 16 befestigt. Mittels der zweiten Druckscheibe 70 wird somit ein Ablösen der Permanentmagnete 30 sowie der zweiten Permanentmagnete 64 verhindert. Hierbei ist die zweite Druckscheibe 40 nicht vollständig geschlossen ausgestaltet, sodass auch ein Luftdurchtritt durch die Kammern 70 möglich ist. Auf diese Weise ist ein Gewicht und folglich eine Trägheit des Rotors 16 verringert.

In Figur 9 ist eine weitere Ausgestaltungsform des Blechpakets 26 gezeigt. Hierbei sind die Kühlöffnungen 70 nicht verändert. Jedoch sind die Taschen 28 sowie die zweiten Taschen 66 abgeändert, und halbmondförmig, in radialer Richtung 36 nach außenweisend ausgestaltet, wie auch in Figur 10 dargestellt. Jede Tasche 28 und jede zweite Tasche 66 weisen ein Halteelement 72 auf, mittels dessen der jeweils zugeordnete Permanentmagnet 30 bzw. zweite Permanentmagnete 64 in der tangentialen Richtung 56 gehalten und somit dessen Orientierung festgelegt wird. Folglich sind auch hier jeder der Permanentmagnete 30 bzw. zweite Permanentmagnete 64 lediglich in einer einzigen Position montierbar. Die Taschen 28 sowie die zweiten Taschen 66 sind symmetrisch bezüglich der jeweils zugeordneten radialen Geraden 58 ausgestaltet und U-förmig bzw. halbmondförmig ausgestaltet. Dabei umgreift jede Tasche 28 die jeweils zugeordnete zweite Tasche 66 in der tangentialen Richtung 56.

Zudem weist das Blechpaket 26 insgesamt acht dritte Taschen 74 auf, die ebenfalls jeweils das Halteelements 72 aufweisen, und halbmondförmig, insbesondere U-förmig bzw. halbmondförmig ausgestaltet sind, und in der radialen Richtung 36 nach außen weisen. Auch die dritten Taschen 74 sind achsensymmetrisch bezüglich der jeweils zugeordneten radialen Geraden 58 angeordnet und bezüglich der jeweils zugeordneten Tasche 28 und zweiten Tasche 66 in der Radialrichtung 36 nach außen versetzt, sodass sowohl die zugeordnete zweite Tasche 66 als auch die Tasche 28 die dritte Taschen 74 in der Tangentialrichtung 56 umgreift.

In jeder dritten Taschen 74 ist jeweils ein nicht dargestellter dritter Permanentmagnet angeordnet, der ebenfalls einen trapezförmigen Querschnitt aufweist. Mittels der Halteelemente 72 wird sichergestellt, dass der jeweils zugeordnete dritte Permanentmagnet lediglich in einer einzigen Position innerhalb der jeweiligen dritten Tasche 74 montierbar ist. Dabei ist die Magnetisierungsrichtung jedes dritten Permanentmagnete parallel zu der Magnetisierungsrichtung 62 des der gleichen radialen Geraden 58 zugeordneten Permanentmagneten 30. Folglich ist jede der radialen Geraden 58, die zueinander jeweils um einen Winkel von 45° versetzt sind, einer der Permanentmagnete 30, einer der zweiten Permanentmagneten 64 und einer der dritten Permanentmagnete zugeordnet, die somit jeweils eine Gruppe an Permanentmagneten bilden.

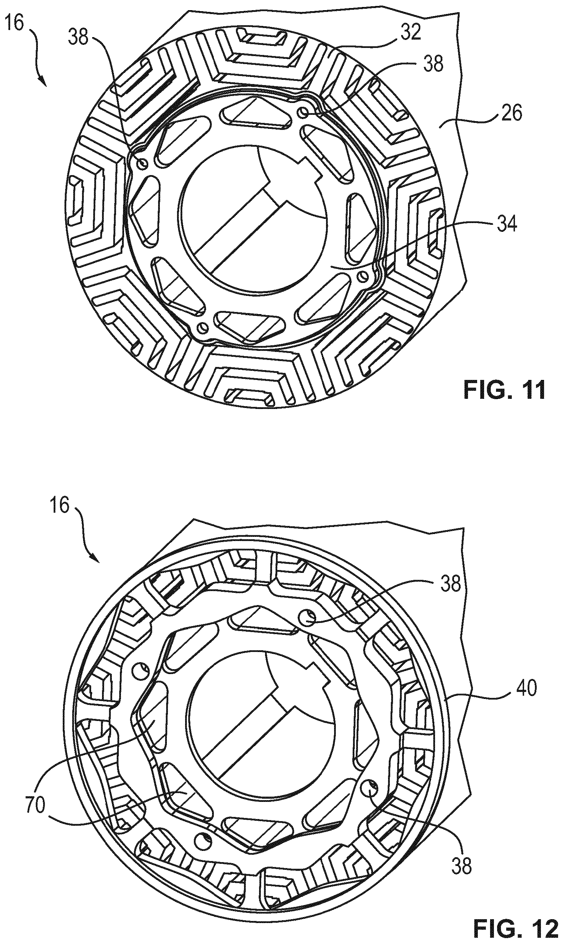

In Figur elf ist der Rotor 16 mit Blick auf eine der Stirnseiten 32 des Blechpakets 26 dargestellt, wobei an dieser die angepasste erste Druckscheibe 34 mittels der ersten Gewindestangen 38 befestigt ist. In Figur 12 ist zusätzlich die zweite Druckscheibe 40 gezeigt, die ebenfalls mittels der ersten Gewindestangen 38 befestigt ist. Die erste Druckscheibe 34 ist bezüglich der Taschen 28, der zweiten Taschen 66 und der dritten Taschen 74 in der Radialrichtung 36 nach innen versetzt, und überdeckt diese folglich nicht. Die zweite Druckscheibe 40 hingegen überdeckt sowohl sämtliche Taschen 28 als auch sämtliche zweite Taschen 66 und sämtliche dritte Taschen 74 zumindest teilweise, sodass ein Ablösen der Permanentmagnete 30, der zweiten Permanentmagneten 64 und der dritten Permanentmagnete unterbunden ist.

Zusammenfassend wird mittels der trapezförmigen Ausgestaltung der Permanentmagnete 30 und der entsprechend Ausgestaltung der Taschen 28 sichergestellt, dass die Permanentmagnete 30 stets mit der richtigen Polarisierung montiert werden, sodass eine Herstellung effektiver, schneller und mit weniger Ausschuss erfolgt. Dabei ist es möglich, die Permanentmagnete 30 sowie die etwaigen vorhandenen zweiten Permanentmagnete 64 und die etwaig vorhandenen dritten Permanentmagnete aus einem Ferrit zu erstellen, wobei aufgrund der Ausgestaltungsform der Taschen 28, der zweiten Taschen 66 und der etwaigen dritten Taschen 74 und/oder der etwaigen Kammern 70 aufgrund der Ausbildung einer Reluktanzkraft ein Drehmoment erhöht ist. Mittels der ersten Druckscheiben 34 werden die einzelnen Bleche des Blechpakets 26 aneinander festgelegt, sodass eine Montage der Permanentmagneten 30, der zweiten Permanentmagneten 64 sowie der etwaigen dritten Permanentmagnete erfolgen kann, ohne dass sich die Bleche voneinander ablösen. Mittels der zweiten Druckscheiben 40 wird ein Ablösen der Permanentmagneten 30, zweiten Permanentmagneten 64 sowie der etwaigen dritten Permanentmagneten verhindert, wobei dies keine oder lediglich vergleichsweise geringe Auswirkungen auf die magnetischen Eigenschaften des Rotors 16 aufweist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung, die durch die beigefügten Ansprüche definiert ist, zu ver-

## Patentansprüche

1. Rotor (16) einer elektrischen Maschine (6), insbesondere Synchron-Reluktanzmotor, der eine Anzahl an gleichartigen Permanentmagneten (30) aufweist, von denen jeder In jeweils einer zugeordneten Tasche (28) des Rotors (16) angeordnet Ist,
- wobei der Rotor (16) ein die Taschen (28) aufweisendes Blechpaket (26) umfasst, das eine Anzahl an in einer axialen Richtung (24) übereinandergestapelten Bleche aufweist,
- wobei eine der Stirnseiten (32) des Blechpakets (26) teilweise mit einer ersten Druckscheibe (34) abgedeckt ist, die bezüglich der Taschen (28) In einer radialen Richtung (36) nach innen versetzt ist, und die kraftschlüssig an dem Blechpaket (26) anliegt, sodass die Öffnungen der durch das Blechpaket (26) hindurch reichenden Taschen (28) mit den ersten Druckscheiben (34) nicht abgedeckt sind,
- wobei die weitere Stirnseite (32) des Blechpakets (26) mit einer weiteren ersten Druckscheibe (34) abgedeckt ist,
- wobei die beiden ersten Druckscheibe (34) gleichartig sind, **dadurch gekennzeichnet,**
- **dass** Befestigungsmittel (38) durch das Blechpaket (26) hindurchragen, mittels derer die belden ersten Druckscheiben (34) aneinander befestigt sind, sodass das Blechpaket (26) zwischen die belden ersten Druckscheiben (34) geklemmt ist,
- **dass** eine der Stirnseiten (32) des Blechpakets (26), mit einer zweiten Druckscheibe (40) teilweise abgedeckt ist, die die Taschen (28) zumindest teilweise überdeckt,
- **dass** eine der ersten Druckscheiben (34) in der axialen Richtung (24) zwischen der zweiten Druckscheiben (40) und dem Blechpaket (26) angeordnet ist, wobei die zweite Druckscheibe (40) an dieser ersten Druckscheibe (34) befestigt ist, sodass mittels der zweiten Druckscheibe (40) ein Ablösen der Permanentmagnete (30) aus den Taschen (28) in der axialen Richtung (24) unterbunden ist.

2. Rotor (16) nach Anspruch 1,
**dadurch gekennzeichnet,**
**dass** jede radiale Gerade (58) einen Schwerpunkt (60) des jeweils zugeordneten Permanentmagneten (30) schneidet,

3. Rotor (16) nach einem der Ansprüche 1 bis 2,
**dadurch gekennzeichnet,**
**dass** die Magnetisierungsrichtungen (62) parallel zur jeweiligen radialen Geraden (58) sind.

4. Rotor (16) nach einem der Ansprüche 1 bis 3,
**dadurch gekennzeichnet,**
**dass** der Querschnitt jedes Permanentmagneten (30) senkrecht zur axialen Richtung (24) trapezförmig ist.

5. Rotor (16) nach einem der Ansprüche 1 bis 4,
**dadurch gekennzeichnet,**
**dass** der Querschnitt der Taschen (28) senkrecht zur axialen Richtung (24) gleich dem Querschnitt der Permanentmagnete (30) senkrecht zur axialen Richtung (24) ist.

6. Rotor (16) nach Anspruch 5,
**dadurch gekennzeichnet,**
**dass** jeder Tasche (28) eine Kammer (70) zugeordnet ist, die sich in der tangentialen Richtung (56) anschließt und zur jeweiligen Tasche (28) beabstandet ist.

7. Rotor (16) nach einem der Ansprüche 1 bis 4,
**dadurch gekennzeichnet,**
**dass** die Taschen (28) halbmondförmig in der radialen Richtung (36) nach außen weisend ausgestaltet sind.

8. Elektrischen Maschine (6) mit einem Rotor (16) nach einem der Ansprüche 1 bis 7.

## Claims

1. Rotor (16) of an electric machine (6), in particular synchronous reluctance motor, which has a number of permanent magnets (30) of the same type, each of which is arranged in a respective associated pocket (28) of the rotor (16),
- wherein the rotor (16) comprises a laminated core (26) having the pockets (28) and having a number of sheets stacked above the other in an axial direction (24),
- wherein one of the end faces (32) of the laminated core (26) is partially covered with a first pressure plate (34), which is offset inwards in a radial direction (36) with respect to the pockets (28), and which abuts the laminated core (26) non-positively, so that the openings of the pockets (28) extending through the laminated core (26) are not covered with the first pressure plates (34),
- wherein the further end face (32) of the laminated core (26) is covered with a further first pressure plate (34),
- wherein the two first pressure plates (34) are of the same type,
**characterized in**
- **that** fastening means (38) protrude through the laminated core (26), by means of which the two first pressure plates (34) are fastened to each other, so that the laminated core (26) is clamped between the two first pressure plates (34),
- **that** one of the end faces (32) of the laminated core (26) is partially covered by a second pressure plate (40), which at least partially covers the pockets (28),
- **that** one of the first pressure plates (34) is arranged in the axial direction (24) between the second pressure plate (40) and the laminated core (26), wherein the second pressure plate (40) is fastened to this first pressure plate (34), so that, by means of the second pressure plate (40), a detachment of the permanent magnets (30) from the pockets (28) in the axial direction (24) is prevented.

2. Rotor (16) according to claim 1,
**characterized in**
**that** each radial straight line (58) intersects a center of gravity (60) of the respective associated permanent magnet (30).

3. Rotor (16) according to one of claims 1 to 2,
**characterized in**
**that** the magnetization directions (62) are parallel to the respective radial straight line (58).

4. Rotor (16) according to one of claims 1 to 3,
**characterized in**
**that** the cross-section of each permanent magnet (30) perpendicular to the axial direction (24) is trapezoidal.

5. Rotor (16) according to one of claims 1 to 4,
**characterized in**
**that** the cross-section of the pockets (28) perpendicular to the axial direction (24) is equal to the cross-section of the permanent magnets (30) perpendicular to the axial direction (24).

6. Rotor (16) according to claim 5,
**characterized in**
**that** each pocket (28) is associated with chamber (70), which adjoins in the tangential direction (56) and is spaced apart from the respective pocket (28).

7. Rotor (16) according to one of claims 1 to 4,
**characterized in**
**that** the pockets (28) are of crescent-shaped design pointing outwards in the radial direction (36).

8. Electric machine (6) with a rotor (16) according to one of claims 1 to 7.

## Revendications

1. Rotor (16) d'une machine électrique (6), en particulier moteur synchrone à réluctance, qui comprend un certain nombre d'aimants permanents (30) de même type, dont chacun est disposé dans une poche (28) respective associée du rotor (16),
- dans lequel le rotor (16) comprend un paquet de tôles (26) ayant les poches (28), lequel paquet de tôles (26) comprend un certain nombre de tôles empilées les unes sur les autres dans une direction axiale (24),
- dans lequel l'une des faces frontales (32) du paquet de tôles (26) est partiellement recouverte d'un premier disque de pression (34), qui est décalé vers l'intérieur par rapport aux poches (28) dans une direction radiale (36), et qui s'appuie par adhérence sur le paquet de tôles (26), de sorte que les ouvertures des poches (28) traversant le paquet de tôles (26) ne sont pas recouvertes par les premiers disques de pression (34),
- dans lequel l'autre face frontale (32) du paquet de tôles (26) est recouverte par un autre premier disque de pression (34),
- dans lequel les deux premiers disques de pression (34) sont du même type,
**caractérisé en ce**
- **que** des moyens de fixation (38) font saillie à travers le paquet de tôles (26), au moyen desquels les deux premiers disques de pression (34) sont fixés l'un à l'autre, de sorte que le paquet de tôles (26) est serré entre les deux premiers disques de pression (34),
- **que** l'une des faces frontales (32) du paquet de tôles (26) est partiellement recouverte par un deuxième disque de pression (40), qui recouvre au moins partiellement les poches (28),
- **que** l'un des premiers disques de pression (34) est disposé dans la direction axiale (24) entre le deuxième disque de pression (40) et le paquet de tôles (26), dans lequel le deuxième disque de pression (40) est fixé à ce premier disque de pression (34), de sorte qu'au moyen du deuxième disque de pression (40), un détachement des aimants permanents (30) hors des poches (28) est empêché dans la direction axiale (24).

2. Rotor (16) selon la revendication 1,
**caractérisé en ce**
**que** chaque ligne droite radiale (58) coupe un centre de gravité (60) de l'aimant permanent (30) associé respectif.

3. Rotor (16) selon l'une des revendications 1 à 2,
**caractérisé en ce**
**que** les directions de magnétisation (62) sont parallèles à la droite radiale respective (58).

4. Rotor (16) selon l'une des revendications 1 à 3,
**caractérisé en ce**
**que** la section transversale de chaque aimant permanent (30) perpendiculairement à la direction axiale (24) est trapézoïdale.

5. Rotor (16) selon l'une des revendications 1 à 4,
**caractérisé en ce**
**que** la section transversale des poches (28) perpendiculairement à la direction axiale (24) est égale à la section transversale des aimants permanents (30) perpendiculairement à la direction axiale (24).

6. Rotor (16) selon la revendication 5,
**caractérisé en ce**
**qu'**à chaque poche (28) est associée une chambre (70), qui se raccorde dans la direction tangentielle (56) et qui est espacée de la poche respective (28).

7. Rotor (16) selon l'une des revendications 1 à 4,
**caractérisé en ce**
**que** les poches (28) sont conçues en forme de demi-lune dans la direction radiale (36), orientées vers l'extérieur.

8. Machine électrique (6) avec un rotor (16) selon l'une des revendications 1 à 7.
